(19)

Europäisches
Patentamt
European
Patent Office
Office européen
des brevets

(11) **EP 2 549 296 A1**

(12) **EUROPEAN PATENT APPLICATION**
published in accordance with Art. 153(4) EPC

(43) Date of publication:
**23.01.2013 Bulletin 2013/04**

(51) Int Cl.:
*G01S 15/89* (2006.01)    *G01S 7/526* (2006.01)

(21) Application number: **11756457.5**

(22) Date of filing: **18.03.2011**

(86) International application number:
**PCT/JP2011/056648**

(87) International publication number:
**WO 2011/115274 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2010 JP 2010063421**

(71) Applicants:
• **Hitachi Information & Control Solutions, Ltd.
Hitachi-shi, Ibaraki 319-1293 (JP)**
• **Japan Agency for Marine-Earth Science and
Technology
Yokosuka-shi
Kanagawa
237-0061 (JP)**

(72) Inventors:
• **GOTO Jin
Hitachi-shi
Ibaraki 319-1293 (JP)**
• **EBINA Tomohito
Hitachi-shi
Ibaraki 319-1293 (JP)**
• **SAWA Takao
Yokosuka-shi
Kanagawa 237-0061 (JP)**

(74) Representative: **MERH-IP
Matias Erny Reichl Hoffmann
Paul-Heyse-Strasse 29
80336 München (DE)**

(54)    **PHASED-ARRAY SYNTHETIC APERTURE SONAR SYSTEM**

(57)    It is an object to maintain a processing speed while increasing accuracy of a sonar image. Disclosed is a phased-array synthetic-aperture sonar system, including: a plurality of phased array processors (9) which perform, in parallel, phased array processing for a plurality of incoming data; a phased array distribution device (8) which distributes each simultaneously incoming data to the plurality of phased array processors (9), the incoming data being input from a plurality of receivers disposed in a platform; a synthetic aperture processor (11) which performs synthetic aperture processing by using a plurality of phased array processing results; and a data-shaping buffer device (10) which transfers the phased array processing results output from the plurality of phased array processors (9) to the synthetic aperture processor (11) in the order of receipt of the incoming data.

FIG.1

EP 2 549 296 A1

## Description

Technical Field

The present invention relates to techniques for a phased-array synthetic-aperture sonar system.

Background Art

A process of conventional synthetic aperture sonar, for example, includes: using a 1-CH (channel) transmitter and receiver included in sonar; recording echo (reflected sound wave) data as obtained from a seabed when using a single pulse (1 ping); and repeating data recording while moving a platform such as an underwater probe. Then, a plurality of the recorded echo data are synthesized by synthetic aperture processing to yield a given synthetic aperture sonar image.

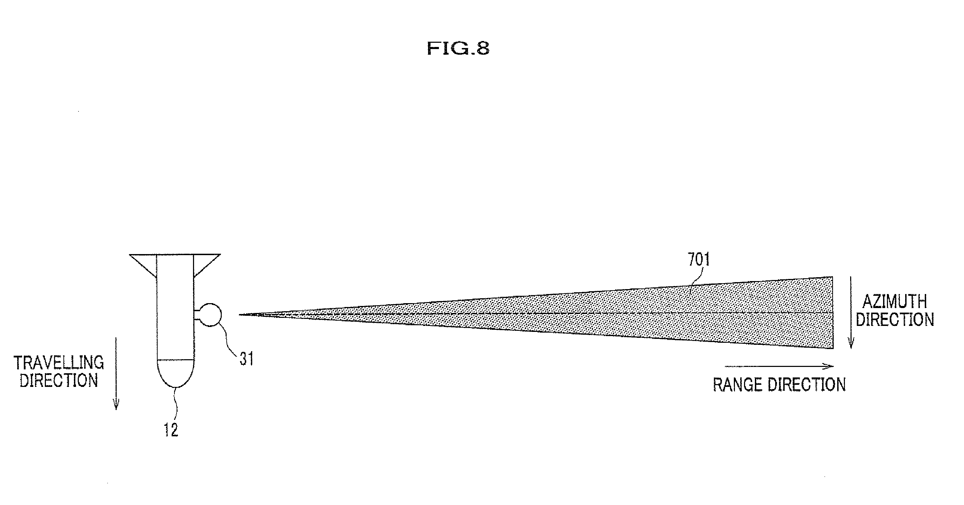

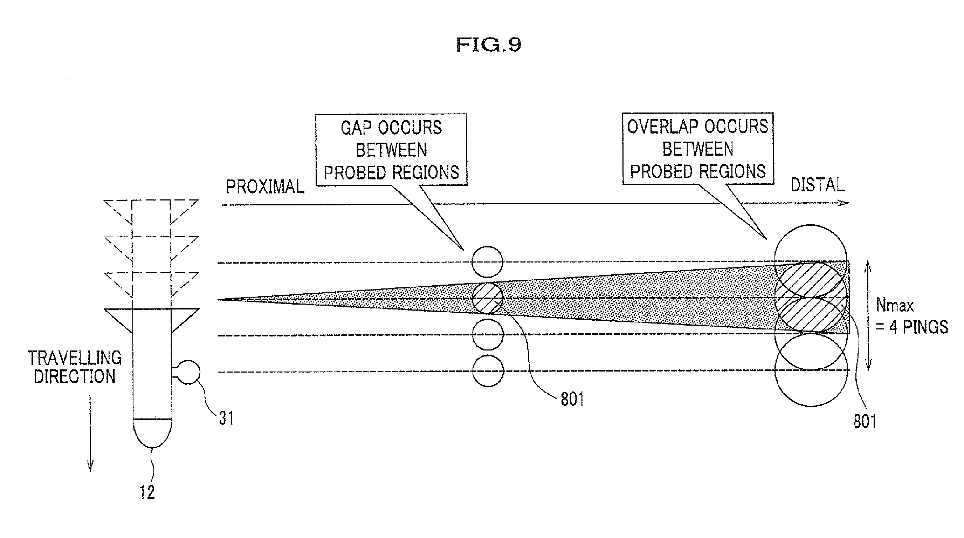

FIGS. 8 to 10 describe conventional synthetic aperture sonar. In FIGS. 8 and 9, similar elements have the same reference signs so as to avoid description redundancy.

First, FIG. 8 illustrates that a platform 12 has a 1-CH (single) receiver 31. A transmitter (not shown) transmits a sound wave. FIG. 8 illustrates that while spreading in an azimuth direction, which is a travelling direction of the platform 12, the wave propagates in a range direction, which is a time direction (a travelling direction of a pulse). Here, an area 701 in FIG. 8 is a data range that can be obtained using a single pulse (1 ping).

Synthetic aperture sonar transmits a sound wave many times while the platform 12 moves as illustrated in FIG. 9. Then, reflected sound waves are synthesized to obtain sonar information. As used herein, the sonar information means an assembly of ping data. In addition, the ping data refers to incoming data at the time of transmitting a single sound wave.

As illustrated in FIG. 9, an open circle 801 indicates a region searchable by using 1 ping. As propagating in a range direction, a sound wave spreads in an azimuth direction. Thus, the closer the probed region 801 is positioned to the platform 12, the narrower area the probed region 801 has. The more far the probed region 801 is positioned to the platform 12, the wider area the probed region 801 has.

Hence, when 4 pings are synthesized to produce a synthetic aperture sonar image as illustrated in FIG. 9, a gap between the probed regions 801 occurs at a region proximal to the platform 12. In addition, an overlap between the probed regions 801 occurs at a region distal to the platform 12. As used herein, an Nmax refers to a maximum number of pings (a ping number indicating that additional synthetic aperture processing produces little effect) used for single synthetic aperture processing.

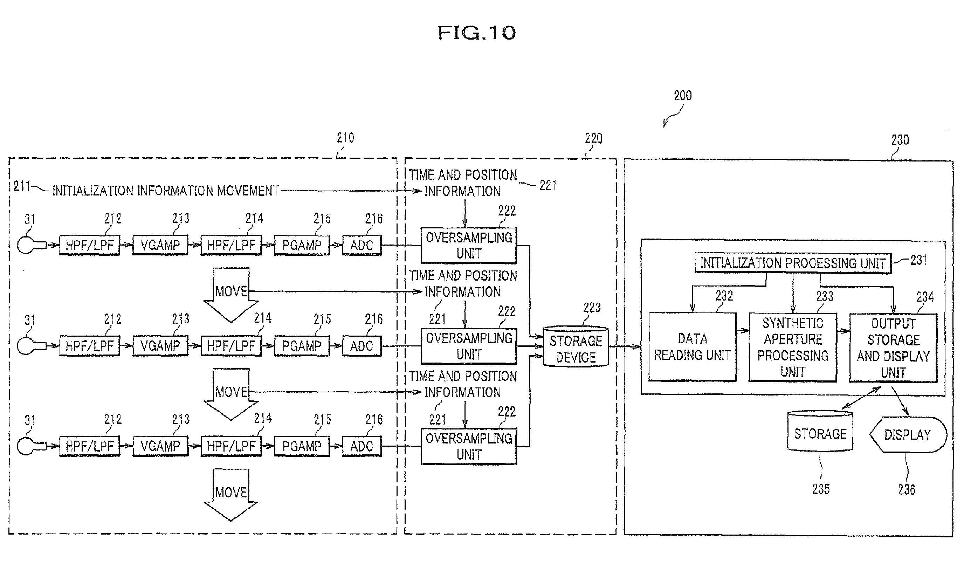

FIG. 10 illustrates, as an example, how to configure a system for conventional synthetic aperture sonar.

A synthetic aperture sonar system 200 includes a sound data transmitting and receiving device 210 which transmits a pulse and receives an echo and which processes incoming data, a data acquisition and storage device 220 which acquires and accumulates data obtained by the sound data transmitting and receiving device 210, and a synthetic aperture processor 230 which performs synthetic aperture processing.

The sound data transmitting and receiving device 210 includes an HPF/LPF (high pass filter/low pass filter) 212 as a bandpass filter, a VGAMP (variable gain amplifier) 213, an HPF/LPF 214, a PGAMP (programmable gain amplifier) 215, and an ADC (analog digital converter) 216. Data received from a receiver 31 is processed via the respective units 212 to 216 to carry out signal processing. Then, the processed data is transferred to the data acquisition and storage device 220.

Incoming data at each movement position of the receiver 31 is transferred to the data acquisition and storage device 220.

The data acquisition and storage device 220 has an oversampling unit 222 which oversamples the input incoming data. The oversampled incoming data, together with a time of ping receipt by the receiver 31 and its position information, is stored in a storage device 223.

Note that the time of echo receipt by the receiver 31 and its position information 221 are calculated by the sound data transmitting and receiving device 210, based on a time and position that have passed from those of initialization information 211 possessed by the sound data transmitting and receiving device 210.

The synthetic aperture processor 230 includes a data reading unit 232 which reads data from the storage device 223 of the data acquisition and storage device 220, a synthetic aperture processing unit 233 which performs synthetic aperture processing for the read data, and an output storage and display unit 234 which stores a synthetic aperture processing output in a storage 235 and which displays the output on a display 236 as a sonar image. In addition, the synthetic aperture processor 230 has an initialization processing unit 231 which initializes the respective units.

In synthetic aperture sonar as illustrated in FIGS. 8 to 10, a gap between the probed regions 801 occurs at a region proximal to the platform 12 as shown in FIG. 9. In addition, an overlap between the probed regions 801 occurs at a region distal to the platform 12.

Then, Patent Literature 1 discloses synthetic aperture sonar in which phased array processing is carried out using ping data acquired at multiple positions, followed by synthetic aperture processing. As used herein, the term "beam steering" in Patent Literature 1 corresponds to phased array processing. Hereinafter, such processing is referred to as phased-array synthetic-aperture processing. Note that the phased array processing herein controls a phase of a sound wave received by the respective small receivers, thereby synthesizing the sound waves received by these receivers. This processing changes directivity of the sound waves for analysis.

In addition, a distance to an object can be estimated from a time t that is from ping transmission to receipt. Thus, the distance is treated as a given value.

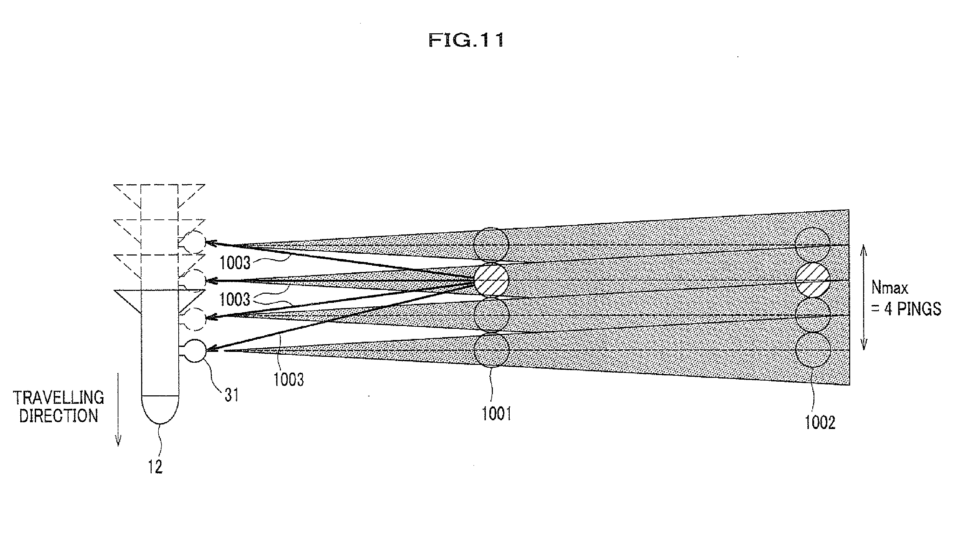

FIG. 11 outlines conventional phased array synthetic aperture sonar.

As illustrated in FIG. 11, an object 1001 proximal to a platform 12 is analyzed by phased array processing which detects seabed conditions by using pings transmitted and received at respective movement positions (reference sign 1003). An object 1002 distal to the platform 12 is analyzed by synthetic aperture processing. This can achieve uniform resolution (uniform probed region) within an entire area. The Nmax is the same value as in FIG. 8. The arrow denoted by the reference sign 1003 indicates that a receiver 31 receives a reflected sound wave of a single ping at different positions.

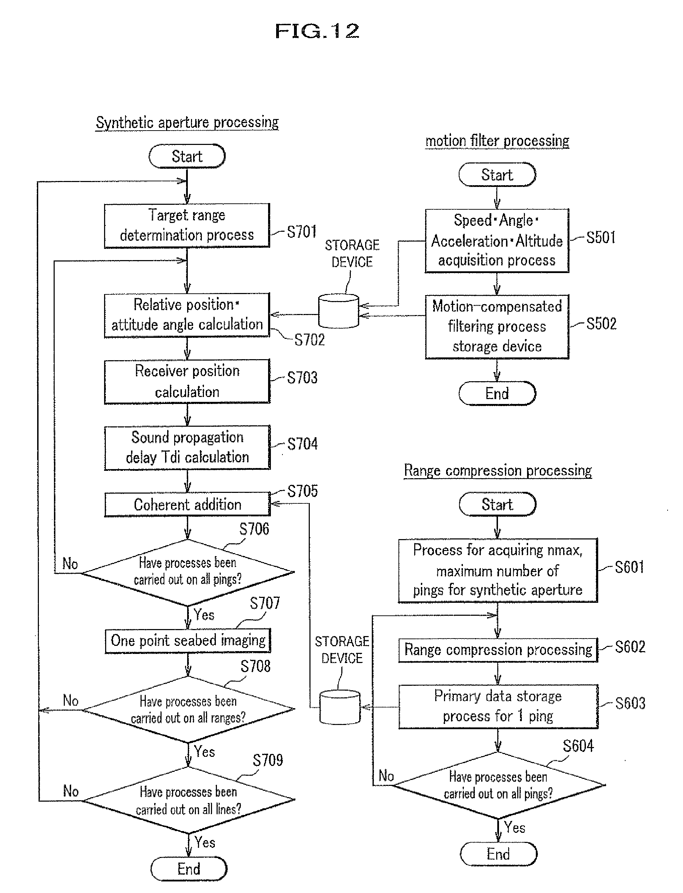

The following outlines phased array synthetic aperture processing as illustrated in FIG. 11. Note that the detailed processing is described below in FIG. 12.

First, a phased-array synthetic-aperture sonar system executes range compression of a recorded waveform (echo waveform) and a predetermined waveform (pulse waveform) in a time domain. Next, the phased-array synthetic-aperture sonar system determines a target observation line subjected to phased array processing, that is, a seabed line (image target line) which becomes an imaging object. Phased array processing is applied to a close range, which eliminates a data gap. Synthetic aperture processing is performed in a long range, which prevents resolution deterioration. Practically, as described below in FIG. 12, both the phased array processing and the synthetic aperture processing are applied to the same data. This causes a reduced effect of the synthetic aperture processing on a proximal object. Also, a by far less echo angle (phase difference) in respect to a distal object causes a reduced effect of the phased array processing. Note that data used for the processes is defined by a beam irradiation range of each single element included in a receiving array. Then, the phased-array synthetic-aperture sonar system calculates a delay time of an incoming signal received by the receiver 31 at the respective movement positions while considering motion (speed, angle) information of the sonar main unit. After that, the incoming data is subjected to coherent addition to produce an image of one location on or above a seabed. This process is repeated regarding an entire seabed region to produce a sonar image.

Note that range-compressed data is made to have a sampling rate with the same frequency as a transmission bandwidth. During the following azimuth compression, the 1.5-dimensional synthetic aperture algorithm disclosed in Non Patent Literature 1 can be applied. The primary data storage size is determined according to the Nmax, a maximum number of pings for synthetic aperture.

An inertial navigator (not shown) and other instruments produce speed information (Vx, Vy, Vz), angle information ($\theta$, $\omega$, $\varphi$), acceleration information (Ax, Ay, Az), and altitude information (h) of the platform 12. The information contains information, such as noise, unnecessary for motion compensation. As used herein, the speed, angle, acceleration, and altitude information corresponds to time and position information 221 in FIG. 10. In order to remove the unnecessary information, unnecessary frequency range information is removed by using techniques disclosed in Patent Literature 2 and/or Non Patent Literature 2. The temporary data storage size is defined by, for example, data of a maximum number of pings for synthetic aperture Nmax x Pulse interval Tp x 3 seconds. The temporary storage size after motion compensation, however, is Nmax x Tp. Here, 3 seconds mean a period during which the receiver receives an echo. The phased-array synthetic-aperture sonar creates image data for a horizontal (a direction perpendicular to a pulse direction) line (image target line) in a manner similar to that of common sonar. A difference between the phased-array synthetic-aperture sonar system and conventional sonar does not reside in a point that the sonar searches just a horizontal direction. The above system makes positions on or above a seabed grided. Then, any image target line along the grid is probed to produce an image.

FIG. 12 is a flow chart illustrating how to perform phased-array synthetic-aperture processing in FIG. 11.

First, the phased-array synthetic-aperture sonar system performs motion filter processing and range compression processing before synthetic aperture processing.

During the motion filter processing, the phased-array synthetic-aperture sonar system carries out a speed·angle·acceleration·altitude acquisition process (S501) that acquires, from an inertial navigator of the system, each piece of information regarding a speed (Vx, Vy, Vz), an angle ($\theta$, $\omega$, $\varphi$), an acceleration (Ax, Ay, Az), and an altitude (h) of the platform 12. Then, the acquired speed·angle·acceleration·altitude information is stored in a storage device. Further, in the phased-array synthetic-aperture sonar system, a technique disclosed in Patent Literature 2 or Non Patent Literature 2 is used to perform motion-compensated filtering process (S502). The processing output is then stored in the storage device.

In addition, during the range compression processing, the phased-array synthetic-aperture sonar obtains a maximum number of pings for synthetic aperture Nmax, which is a maximum number of pings to execute synthetic aperture processing (S601), from, for example, a storage device.

Following that, the phased-array synthetic-aperture sonar system carries out the range compression processing for incoming data (S602). Since a technique disclosed in Non Patent Literature 1 is used for the range compression processing, its description is omitted.

Next, the phased-array synthetic-aperture sonar system performs a primary data storage process for 1 ping (S603), which process stores the range-compressed incoming data for 1 ping in the storage device.

Then, the phased-array synthetic-aperture sonar system determines (S604) whether or not processes of steps S602 and S603 have been completed on all the pings for the Nmax, a maximum number of pings for synthetic aperture.

When the result of step S604 indicates that the processes of steps S602 and S603 have not been carried out on the pings for the Nmax, a maximum number of pings for synthetic aperture, (S604→No), the phased-array synthetic-aperture system returns the process to step S602.

When the result of step S604 indicates that the processes of steps S602 and S603 have been carried out on the pings for the Nmax, a maximum number of pings for synthetic aperture, (S604→Yes), the phased-array synthetic-aperture sonar system completes the range compression processing.

Note that the range compression processing is carried out on incoming data used for synthetic aperture processing whenever the synthetic aperture processing is carried out.

The following describes synthetic aperture processing.

The phased-array synthetic-aperture sonar system sets a target at a position R (image target point) on an image target line, and carries out a target range determination process (S701) which determines, from a range of beam reception angle (= range of transmitter's beam reception angle) of a receiver, how many pings are used for data processing. That is, the phased-array synthetic-aperture sonar system determines how many pings are required for drawing an image target line.

The phased-array synthetic-aperture sonar system obtains, from the storage device, speed·angle·acceleration·altitude information and the motion filter processing output, and performs a relative position·attitude angle calculation (S702), which calculates a relative position and an attitude angle of the platform 12. As used herein, the term "altitude" refers to a distance from a seabed to the platform 12.

Next, the phased-array synthetic-aperture sonar system carries out a receiver position calculation (S703), which calculates a receiver position at the time of receipt of an echo. As used herein, the relative position and attitude angle of the platform 12 as calculated in step S702 and the receiver position as calculated in step S703 are information corresponding to the time and position information 221 in FIG. 10.

Then, the phased-array synthetic-aperture sonar system carries out a sound propagation delay Tdi calculation (S704), which calculates a sound propagation delay Tdi at the receiver position as calculated in step S703. The "A" is defined by a distance from a sonar transmission device to a point (image target point) of a seabed, which is an imaging object. The "B" is defined by a distance from the above image target point to the receiver 31. At that time, the sound propagation delay Tdi is a value represented by the following equation (1).
$$\mathrm{Tdi} = (\mathrm{A} + \mathrm{B}) \,/\, \mathrm{Speed\ of\ Sound} \cdot \cdot (1)$$

Note that due to the attitude of the platform 12, the values of A and B are not necessarily the same.

The phased-array synthetic-aperture sonar system obtains range-compressed data for 1 ping from the storage device, and extracts phase information from the above data. Further, the receiver position and the sound propagation delay Tdi are used to carry out a coherent addition process (S705). After that, the system acquires pulse and echo information which is an assembly of the ping data (i.e., incoming data at the time of transmitting a single sound wave). The waveform data before the range compression has only intensity information. In contrast, the waveform data after the range compression has waveform data with, in addition to intensity information, pulse (chirp signal) phase information, which is represented by a complex number. Note that the process of step S705 is azimuth compression disclosed in Non Patent Literature 1. In addition, it is rare to perform sampling at a time of the sound propagation delay Tdi. That is, the time of sampling is not basically the same as the Tdi. Accordingly, at step S705, two samples before and after Tdi are used. Then, interpolation is carried out to draw an image target point.

As used herein, the processes of steps S703 to S705 correspond to phased array processing.

Next, the phased-array synthetic-aperture sonar system determines (S706) whether or not all the pings for the Nmax, a maximum number of pings for synthetic aperture, have been processed.

When the result of step S706 indicates that all the pings for the Nmax have not been processed (5706→No), the phased-array synthetic-aperture sonar system returns the process to step S702.

When the result of step S706 indicates that all the pings for the Nmax have been processed (S706→Yes), the phased-array synthetic-aperture sonar system performs one point seabed imaging (S707) to draw an image target point based on the pulse and echo information as obtained in step S705.

Next, the phased-array synthetic-aperture sonar system determines (S708) whether or not the processes of steps S701 to S707 have been carried out on all the ranges.

When the result of step S708 indicates that all the ranges have not been processed (S708→No), the phased-array synthetic-aperture sonar system returns the process to step S701.

When the result of step S708 indicates that all the ranges have been processed (S708→Yes), the phased-array synthetic-aperture sonar system determines (S709) whether or not the processes of steps S701 to S708 have been carried out on all the image target lines.

When the result of step S709 indicates that the process is incomplete (S709→No), the phased-array synthetic-aperture sonar system returns the process to step S701 and processes the next image target line.

When the result of step S709 indicates that the process has been completed (S709→Yes), the phased-array synthetic-aperture sonar system ends the process.

Use of a large number of data makes the synthetic aperture processing high resolution. In addition, conventional sonar without using the position and attitude information is a system in which the abscissa represents a pulse number and the ordinate represents a time to display an incoming signal. In contrast, synthetic aperture sonar is a system in which the abscissa represents a position in a travelling direction and the ordinate represents a range distance to display a signal in a relative coordinate system. Because of this, the motion compensation processing of the sonar main unit makes it possible for a signal reflected by a seabed surface to be seen as a less distorted, natural image. Besides, the phased-array synthetic-aperture sonar has an effect of the synthetic aperture processing and, in addition, the phased array processing can make a seabed surface grided regardless of a transmission interval of a pulse. This can produce a seabed image with uniform resolution.

Citation List

Patent Literature

   Patent Literature 1: JP2001-116842A
   Patent Literature 2: JP4062311B

Non Patent Literature

   Non Patent Literature 1: T. Sawa, T. Aoki, H. Yoshida, T. Hyakudome, S. Ishibashi, S. Matsubara, S. Wright, "Modified synthetic aperture algorithm for sonar systems", International Journal of Adaptive Control and Signal Processing, Volume 24, Issue 2, February 2010, pp.142-148, Singapore, Singapore.
   Non Patent Literature 2: Takao Sawa, Tomoo Kamakura, Taro Aoki, and Jyunichiro Tahara, "Motion compensation of synthetic aperture sonar with acceleration sensors", Japanese journal of applied physics, Vol. 46, No. 7B, (2007), pp.4977-4981, Japan.

Summary of Invention

Technical Problem

Conventional phased-array synthetic-aperture sonar has difficulty achieving real-time processing. Data obtained from the sonar is temporarily stored in a storage device, and then the data is processed by batch processing. This is because workload for processing an echo is enormously large and producing a real-time sonar image requires a high performance calculator.

So far, in order to reduce the processing workload, synthetic aperture processing uses an arithmetic expression that rarely executes division while having large processing workload. A method such as approximation using Taylor expansion (binomial theorem) is used for a trigonometric function. These approaches have not solved the problem.

There are roughly two reasons for this. One reason is that a volume of data processing per 1 ping is huge and a transmission interval between pings is short. The other reason is that motion compensation for a sonar main unit, phased array processing, and synthetic aperture processing must be carried out on the ping data.

With regard to the former point, workload for processing data is intended to be reduced, for example, by subsampling incoming data, by shortening a synthetic aperture length, and by narrowing an observation range to cut resolution. In addition, with regard to the latter point, methods such as subsampling of intervals applicable to motion compensation processing are being conducted.

The purpose of synthetic-aperture sonar, however, is to acquire a high resolution image of the seabed surface. Hence, subsampling the incoming data causes decreased data image resolution.

In addition, unfortunately, convention phased-array synthetic-aperture sonar requires a considerable time until data for an image target point is completely determined. This is because the incoming data covering a point X on or above a seabed cannot be subjected to phased-array synthetic-aperture processing from a ping (Ping 1) at which data can be obtained at the edge of starting synthetic-aperture processing for a sonar main unit, up to a ping (Ping N) at which data can be obtained at the edge of stopping the synthetic-aperture processing, that is, until the ping data is completely determined (defined by the Nmax).

Meanwhile, in order to produce a more accurate seabed image, a highly accurate sonar image is needed.

In view of such a background, the present invention has been completed. It is an object of the present invention to maintain a processing speed while increasing accuracy of a sonar image.

Solution to Problem

In order to solve the above problem, an embodiment of the present invention includes: a plurality of phased array processors which perform, in parallel, phased array processing for a plurality of incoming data; a phased array distribution device which distributes the plurality of incoming data to the plurality of phased array processors for each incoming data, the incoming data being input from a plurality of receivers disposed in a platform; a synthetic aperture processor which performs synthetic aperture processing by using a plurality of phased array processing results; and a data-shaping buffer device which transfers the phased array processing results output from the plurality of phased array processors to the synthetic aperture processor in an order of receipt of the incoming data.

Advantageous Effects of Invention

Embodiments of the present invention make it possible to maintain a processing speed while increasing accuracy of a sonar image.

Brief Description of Drawings

FIG. 1 illustrates, as an example, how to configure a phased-array synthetic-aperture sonar system according to an embodiment of the present invention.
FIG. 2 outlines a phased-array synthetic-aperture sonar system according to an embodiment of the present invention.
FIG. 3 is a flow chart illustrating a flow of phased-array synthetic-aperture processing according to an embodiment of the present invention.
FIG. 4 is a flow chart illustrating a detailed procedure for phased-array synthetic-aperture sonar according to an embodiment of the present invention.
FIG. 5 illustrates how to draw image target points.
FIG. 6 illustrates, as an example, how to configure a phased-array synthetic-aperture sonar system of an embodiment of the present invention by using PCs.
FIG. 7 illustrates a connection example when each PC shown in FIG. 6 is connected on a network.
FIG. 8 outlines sonar.
FIG. 9 outlines conventional synthetic aperture sonar.
FIG. 10 illustrates, as an example, how to configure a conventional synthetic-aperture sonar system.
FIG. 11 outlines conventional phased-array synthetic-aperture sonar.
FIG. 12 is a flow chart illustrating how to perform conventional phased-array synthetic-aperture processing.

Description of Embodiments

The following details an embodiment of the present invention (referred to as an "embodiment") by referring to appropriate drawings.

«System Configuration»

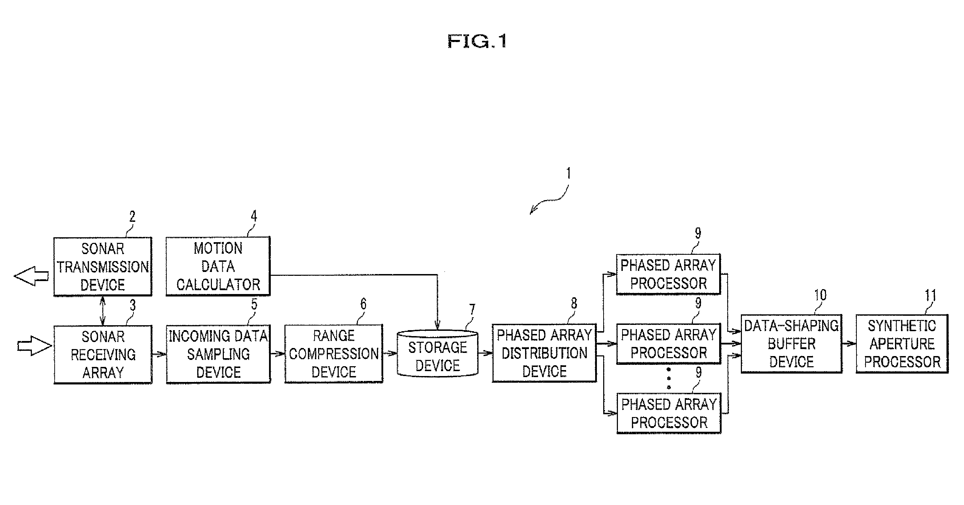

FIG. 1 illustrates, as an example, how to configure a phased-array synthetic-aperture sonar system according to an embodiment of the present invention.

A phased-array synthetic-aperture sonar system 1 includes a sonar transmission device 2, a sonar receiving array 3, a motion data calculator 4, an incoming data sampling device 5, a range compression device 6, a storage device 7, a phased array distribution device 8, a plurality of phased array processors 9, a data-shaping buffer device 10, and a synthetic aperture processor 11.

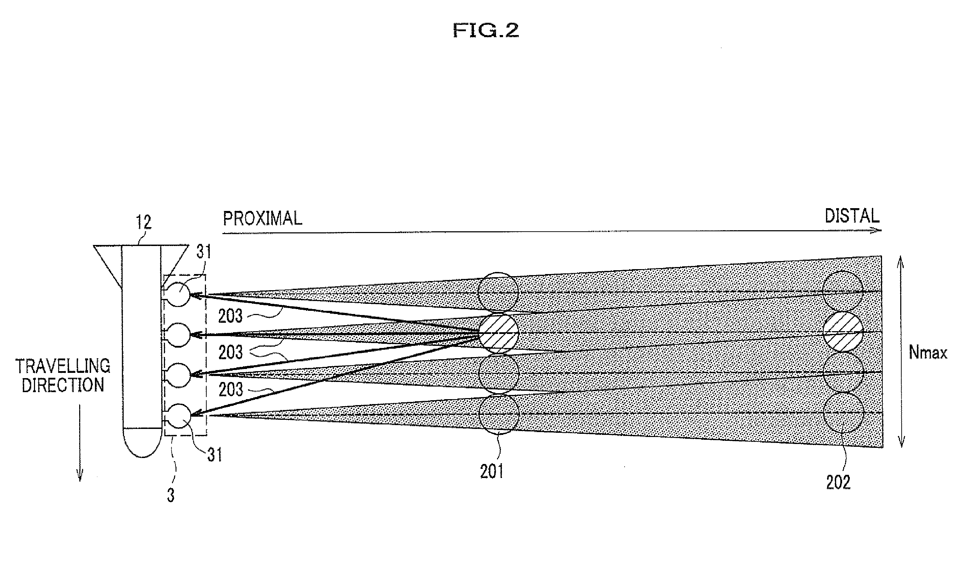

The sonar transmission device 2 transmits a pulse (sound wave), and a platform 12 (FIG. 2) has one sonar transmission device 2.

The sonar receiving array 3 has a plurality of sonar receivers 31 (FIG. 2), which are arranged with an interval at 1/2 wavelength of a pulse: The number of lines for the sonar receiving array 3 may be any number, but is preferably one or two. The arrangement, however, is not limited to this, but the receivers 31 may be arranged in grid.

The motion data calculator 4 performs motion compensation for the platform 12 in view of a speed, angle, and altitude of the platform 12.

The incoming data sampling device 5 samples incoming data transferred from each receiver 31.

The range compression device 6 performs range compression processing for data transferred from the incoming data sampling device 5.

The storage device 7 stores each piece of speed, angle, and altitude information of the platform 12, the results of motion compensation, and the range-compressed incoming data.

The phased array distribution device 8 selects, depending on workload for each incoming data and on priority, a phased array processor 9 that can process data, and makes the selected phased array processor 9 start phased array processing. This configuration enables the processing workload to be distributed even in the presence of performance differences among the phased array processors 9.

The data-shaping buffer device 10 sends the results output from each phased array processor 9 to the synthetic aperture processor 11 in the order of receipt of the ping. This configuration can compromise the performance differences (differences in a processing speed) among phased array processors 9, and can keep the order of the phased array processing output.

The synthetic aperture processor 11 uses phased array processing results output from the data-shaping buffer device 10 to perform synthetic aperture processing.

Each of the devices 2 to 6 and 8 to 11 may be modeled by a specialized hardware, or may be modeled by loading a program stored in a ROM (Read Only Memory) on a RAM (Random Access Memory), followed by its implementation by a CPU (Central Processing Unit).

«Overview»

FIG. 2 outlines a phased-array synthetic-aperture sonar system according to an embodiment of the present invention.

As illustrated in FIG. 2, the phased-array synthetic-aperture sonar system 1 (FIG. 1) according to this embodiment uses pings simultaneously received at a plurality of receivers 31 (sonar receiving array 3) disposed on the platform 12 to perform phased array processing and synthetic aperture processing.

An object 201 proximal to the platform 12 is subjected to the phased array processing that detects seabed conditions by using the pings transmitted and received at each movement position (reference sign 203). An object 202 distal to the platform 12 is subjected to synthetic aperture processing. A plurality of receivers 31 are used for each processing, which increases accuracy of a sonar image.

Note that an arrow denoted by the reference sign 203 indicates that reflected sound waves of a single ping are received by a plurality of different receivers 31.

«Flow Chart»

Hereinafter, with reference to FIGS. 1 and 2, FIGS. 3 and 4 describes a flow of phased-array synthetic-aperture processing according to an embodiment of the present invention.

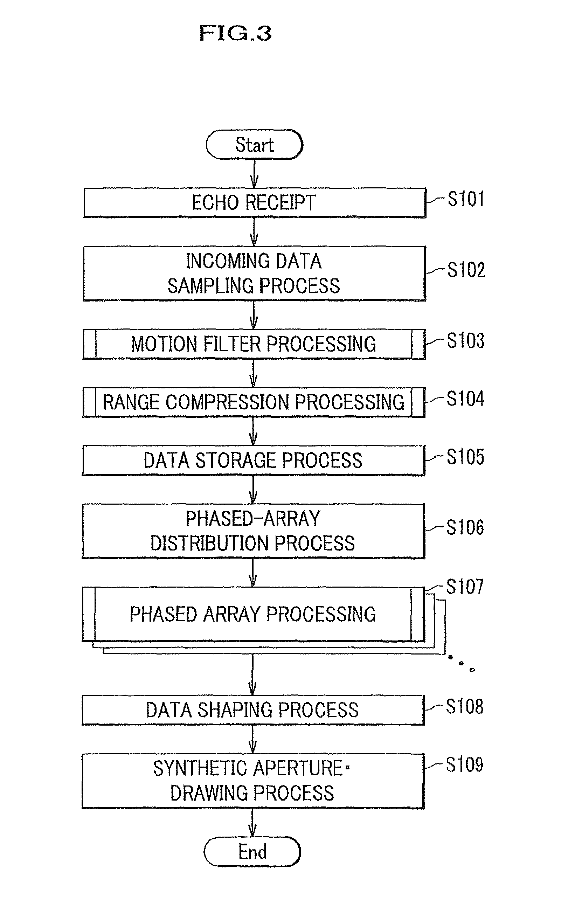

FIG. 3 is a flow chart illustrating a flow of phased-array synthetic-aperture processing according to an embodiment of the present invention.

First, each receiver 31 of the sonar receiving array 3 receives an echo (S101).

Next, the incoming data sampling device 5 samples the incoming data (S102).

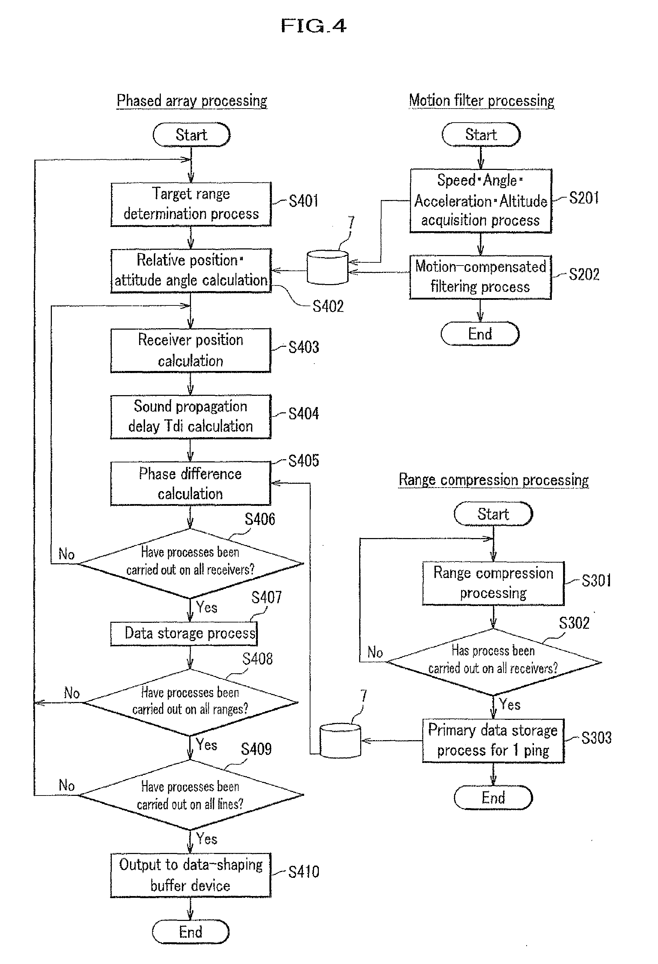

Then, the motion data calculator 4 performs motion filter processing (S103), which removes motion noise of the platform 12, by using each piece of speed, angle, and altitude information of the platform 12 as obtained by an inertial navigator (not shown). FIG. 4 describes the motion filter processing below.

Following that, the range compression device 6 performs range compression processing for each incoming data (S104). FIG. 4 describes the range compression processing below.

After that, the range compression device 6 and the motion data calculator 4 carry out a data storage process (S105), which stores the range-compressed incoming data, each piece of speed, angle, and altitude information of the platform 12, and the motion compensation output into the storage device 7.

Further, the phased array distribution device 8 selects a phased array processor 9 that can process data and makes the selected phased array processor 9 start phased array processing, thereby conducting a phased-array distribution process which decentralizes phased array processing (S106). The phased array distribution device 8 selects a phased array processor 9 that can process data, based on a phased array processor 9 with low workload and predetermined priority. The priority may be determined, based on performance of the phased array processor 9, by a user.

Next, each phased array processor 9 performs phased array processing (S107). FIG. 4 describes the phased array processing below.

Then, the data-shaping buffer device 10 aligns phased array processing outputs in the order of receipt of the ping to carry out a data shaping process that sends the outputs to the synthetic aperture processor 11 (S108). The data-shaping buffer device 10 is based on a receipt time and others that are associated with each incoming data as attribute data to align the phased array processing outputs in the order of receipt of the ping.

Further, the synthetic aperture processor 11 performs synthetic aperture processing for the phased array processing results output from the data-shaping buffer device 10. Furthermore, the synthetic aperture processor 11 performs a synthetic aperture drawing process (S109), which draws synthetic aperture processing results on a display (not shown) or another unit. The synthetic aperture processor 11 performs, based on coordinate and time information, synthetic aperture processing for image data for 1 ping, which image data is output from the data-shaping buffer device 10. Note that the synthetic aperture processing is a process similar to general synthetic aperture processing, so that the detailed description is omitted.

FIG. 4 is a flow chart illustrating a detailed procedure for phased-array synthetic-aperture sonar according to an embodiment of the present invention.

First, the phased-array synthetic-aperture sonar system 1 performs motion filter processing (step S103 in FIG. 3) and range compression processing (step S104 in FIG. 3) before synthetic aperture processing.

During the motion filter processing, the motion data calculator 4 performs a speed·angle·acceleration·altitude acquisition process (S201) that obtains, from an inertial navigator (not shown) of the system, each piece of information on a speed (Vx, Vy, Vz), an angle ($\theta$, $\omega$, $\varphi$), an acceleration (Ax, Ay, Az), and an altitude (h) of the platform 12, and the obtained speed·angle·acceleration·altitude information is stored in the storage device 7. Further, the motion data calculator 4 performs motion-compensated filtering process (S202) by using a technique disclosed in Patent Literature 2 or Non Patent Literature 2, and the processing results are stored in the storage device 7.

Then, the range compression device 6 performs range compression processing (S301) on incoming data for 1 ping, and determines whether or not sampling has been carried out on all the receivers 31 included in the sonar receiving array 3 (S302). Since a technique disclosed in Non Patent Literature 1 is used for the range compression processing, its description is omitted.

If the result of step S302 indicates that the sampling has not been completed on all the receivers 31 (S302→No), the range compression device 6 returns the process to step S301, and performs the range compression processing for the next receiver.

If the result of step S302 indicates that the sampling has been carried out on all the receivers 31 (5302→Yes), the range compression device 6 performs a primary data storage process for 1 ping (S303), which process stores the range-compressed incoming data for 1 ping in the storage device 7.

The following describes phased array processing.

An individual phased array processor 9 sets a target at a position R (image target point) on an image target line, and performs a target range determination process (S401), which determines, from a range of beam reception angle (=range of transmitter's beam reception angle) of the receiver 31, how many pings are used for data processing. That is, the phased array processor 9 determines how many pings are required for drawing an image target line.

The phased array processor 9 obtains, from the storage device 7, speed·angle·altitude information and the motion filter processing output, and performs a relative position·attitude angle calculation (S402), which calculates a relative position and an attitude angle of the platform 12 with respect to a predetermined reference position. As used herein, the term "altitude" refers to a distance from a seabed to the platform 12.

The following processes of steps S403 to S405 are carried out on each receiver 31 included in the sonar receiving array 3.

Next, the phased array processor 9 performs a receiver position calculation for the receiver 31 of processing subject (S403), which calculation estimates a position of the receiver 31 at receipt of an echo.

Then, the phased array processor 9 performs a sound propagation delay Tdi calculation (S404), which estimates a sound propagation delay Tdi at each receiver position as calculated in step S403.

The sound propagation delay Tdi is a value calculated by the foregoing equation (1).

The phased array processor 9 obtains range-compressed data for 1 ping from the storage device 7, and then acquires phase information from the data. Further, the phased array processor 9 uses the receiver position and the sound propagation delay Tdi to perform a phase difference calculation (S405), thereby producing sonar information. The waveform data before the range compression has only intensity information. In contrast, the waveform data after the range compression has, in addition to intensity information, phase information, which is waveform data with a complex number formulation. Note that the process of step S405 is an overlapping sectional synthetic aperture method disclosed in Patent Literature 1. In addition, the sound propagation delay Tdi is not basically the same as the resolution of the sampled waveform data. Thus, two samples are used in step S405. Then, interpolation is carried out to draw an image target point.

As used herein, the processes of steps S403 to S405 substantially correspond to phased array processing.

The phased array processor 9 determines whether or not the processes of steps S403 to S405 have been carried out on all the receivers 31 included in the sonar receiving array 3 (S406).

If the result of step S406 indicates that the processes have not been completed on all the receivers 31 included in the sonar receiving array 3 (5406→No), the phased array processor 9 returns the process to step S403 and performs the processes of steps S403 to S405 for the next receiver.

If the result of step S406 indicates that the processes have been completed on all the receivers 31 included in the sonar receiving array 3 (S406→Yes), the phased array processor 9 performs a data storage process (S407), which stores the sonar information obtained in step S405 in the storage device 7.

Next, the phased array processor 9 determines (S408) whether or not the processes of steps S401 to S407 have been carried out on all the ranges. That is, the phased array processor 9 determines whether or not the processes of steps S401 to S407 have been carried out on all the points on an image target line.

If the result of step S408 indicates that the processes have not been completed on all the ranges (5408→No), that is, if the processes have not been completed on all the image target points, the phased array processor 9 returns the process to step S401.

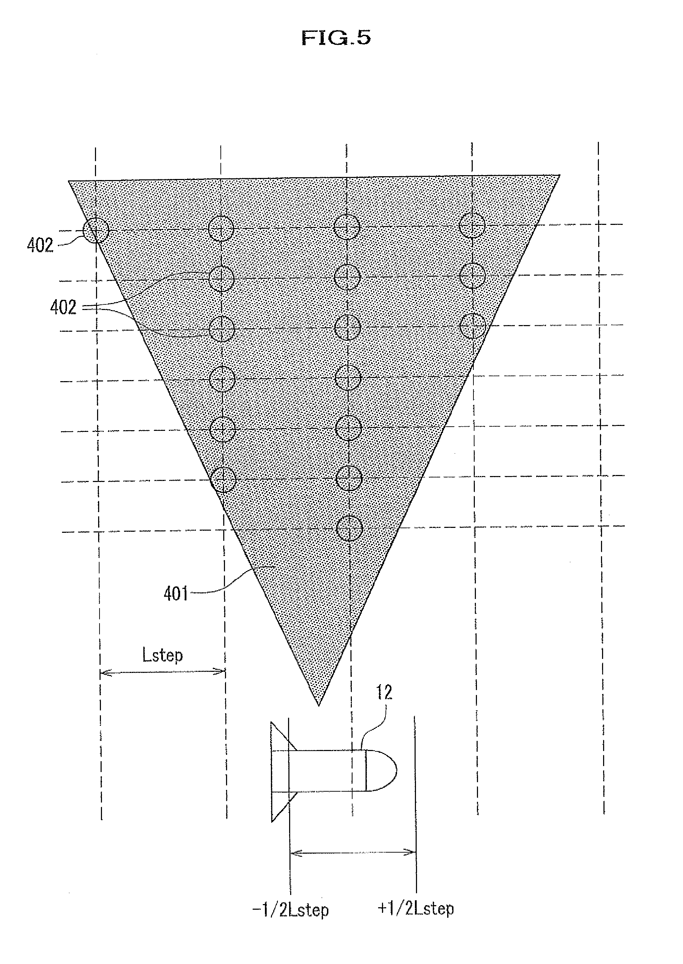

Here, FIG. 5 illustrates image target points.

The area 401 shown in FIG. 5 is a region probed using a single ping. The phased-array synthetic-aperture sonar makes points on or above a seabed grided as illustrated in FIG. 5. At that time, the image target points are defined by grided points 402 within the area 401 that has been searched using a single ping. Note that, in FIG. 5, the term "Lstep" refers to an interval with which a single pulse is transmitted.

If the result of step S408 indicates that the processes have been carried out on all the ranges (S408→Yes), that is, if the processes have been carried out on all the points on an image target line, the phased array processor 9 determines (S409) whether or not the processes of steps S401 to S408 have been completed on all the image target lines. Seabed data that can be obtained using a single ping is data defined by a triangular area (area 401 in FIG. 5) which spreads from just below the platform 12 to distal portions. The phased array processor 9 performs phased array processing for each line along the azimuth direction in this triangular area (i.e., a line containing image target points 402 in a horizontal direction in FIG. 5). That is, at step S409, the phased array processor 9 determines whether or not the processes of steps S401 to S408 have been completed on all the points in the triangular area.

If the result of step S409 indicates that the processes have not been completed (S409→No), the phased array processor 9 returns the process to step S401, and performs the process for the next image target line.

If the result of step S409 indicates that the processes have been completed (S409→Yes), the phased array processor 9 outputs the results calculated in steps S401 to S409 to the data-shaping buffer device 10 (S410), and terminates the process.

This procedure produces a sonar image for 1 ping.

«Other Embodiments»

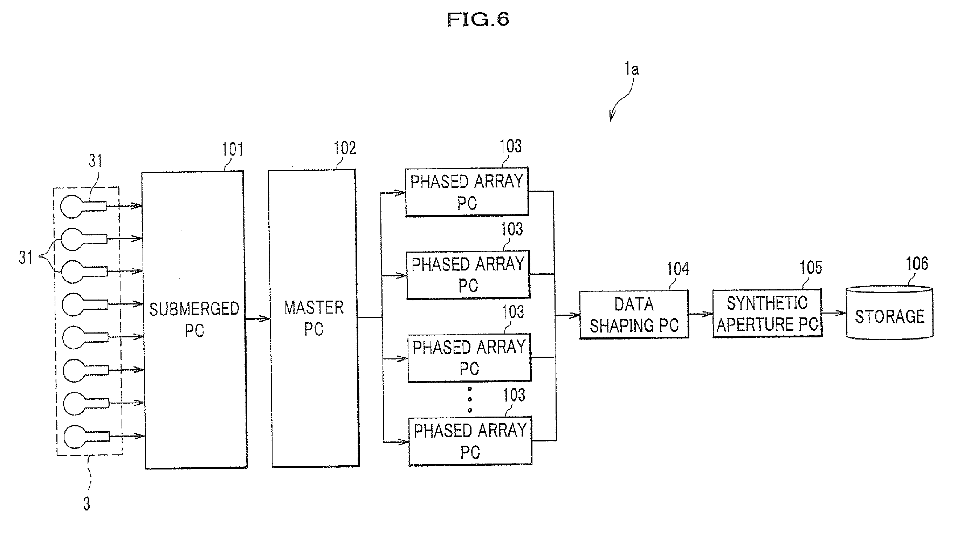

FIG. 6 illustrates, as an example, how to configure a phased-array synthetic-aperture sonar system of an embodiment of the present invention by using PCs. In FIG. 6, the same elements as in FIGS. 1 and 2 are denoted by the same reference sings so as to avoid redundancy.

A phased-array synthetic-aperture sonar system 1a is a system installed in a submarine or an underwater probe.

A submerged PC 101 receiving incoming data from a sonar receiving array 3 is a PC corresponding to the incoming data sampling device 5 in FIG. 1.

A master PC 102 is a PC (computer) corresponding to the motion data calculator 4, the range compression device 6, the storage device 7, and the phased array distribution device 8 in FIG. 1.

Note that functions of the master PC 102 are not limited to the functions described herein, but any combination of the functions is possible. For example, the function of the motion data calculator 4 may be built in an independent PC.

A phased array PC 103 is a PC corresponding to the phased array processor 9 in FIG. 1.

A data shaping PC 104 is a PC corresponding to the data-shaping buffer device 10 in FIG. 1.

A synthetic aperture PC 105 is a PC corresponding to the synthetic aperture processor 11 in FIG. 1, and has a function of storing the synthetic aperture processing results in the storage 106.

Each function of PCs 101 to 105 can be modeled, for example, by loading a program stored in an HDD (Hard Disk Drive) on a RAM and by executing the program by a CPU.

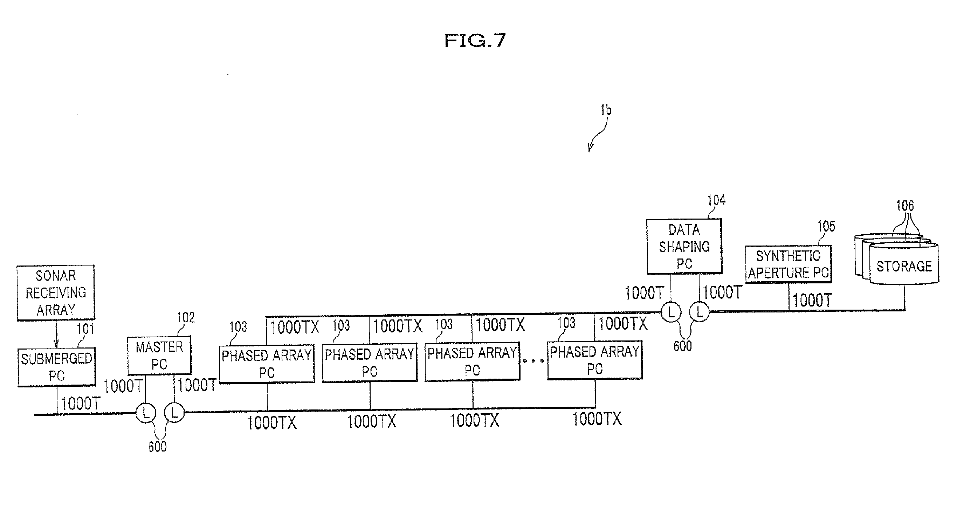

FIG. 7 illustrates, as an example, how to connect each PC shown in FIG. 6 on a network.

In FIG. 7, elements similar to those of FIG. 6 have the same reference signs so as to avoid description redundancy.

In a phased-array synthetic-aperture sonar system 1b in FIG. 7, a master PC 102 and a data shaping PC 104 are connected, via layer switches 600 such as layer 3 switches, to a submerged PC 101, phased array PCs 103 and a synthetic aperture PC 105. In addition, the respective PCs are connected via a gigabit ethernet (1000T, 1000TX: registered trademark).

In the network configuration in FIG. 7, a network from the submerged PC 101 to the master PC 102, a network from the master PC 102 via the phased array PCs 103 to the data shaping PC 104, and a network from the data shaping PC 104 via the synthetic aperture PC 105 to the storage 106 are separated.

This is because of a large volume of the incoming data from the submerged PC 101, the incoming data after range compression, and the output data from the phased array PCs 103. Consequently, this can prevent bandwidth shortage due to connections within the same network.

«Summary»

An embodiment of the present invention processes data obtained from a plurality of receivers 31. This can enhance resolution of a sonar image and can increase a processing speed by decentralizing phased array processing. That is, decentralized processing of data makes it possible to produce a real-time sonar image without reducing the obtained data volume to have resolution equivalent to current resolution.

In addition, so far, in order to draw an image target point, accumulation of sonar data from ping 1 to ping N (a delay for the Nmax) is required. In contrast, an embodiment of the present invention can draw an image with a delay for just 1 ping. Whenever data arrives at the data-shaping buffer device 10, synthetic aperture processing is performed. This enables a processing speed to improve. Further, decentralized phased array processors 9 can be constructed into a system by using low-performance devices, which construction leads to increased cost-effectiveness. When a data volume is changed according to a variation in the number of receivers 31 and in a measurement range, for example, the scalability of the device increases. An embodiment of the present invention is applicable to not only a device configuration using general purpose computers (PCs), but also an integrated device with markedly reduced CPU performance compared to that of the PC.

A submarine or an underwater probe can include the phased-array synthetic-aperture sonar system 1 according to an embodiment of the present invention.

Note that the platform 12 may include the submerged PC 101 in FIGS. 6 and 7 and other PCs 102 to 105 may be deployed in a land facility. In addition, wireless communication, for example may be used for communication between the submerged PC 101 and the master PC 102. This configuration exerts the above effects as well as can decrease the number of devices installed in the platform 12. Likewise, the platform 12 may include the sonar transmission device 2, the sonar receiving array 3, the incoming data sampling device 5, and other devices in FIG. 1. Other devices 4 to 11 may be deployed in a land facility. Then, wireless communication may be used for communication between the incoming data sampling device 5 and the range compression device 6. Also, the motion data calculator 4 and the master PC 102 may obtain each piece of speed, angle, and altitude information of the platform 12 through wireless communication, the information being obtained from an inertial navigator (not shown).

In addition, an embodiment of the present invention may apply to not only sonar but also to radar.

Reference Signs List

| | |
|---|---|
| 1, 1a, 1b | Phased-array synthetic-aperture sonar system |
| 2 | Sonar transmission device |
| 3 | Sonar receiving array |
| 4 | Motion data calculator |
| 5 | Incoming data sampling device |
| 6 | Range compression device |
| 7 | Storage device |
| 8 | Phased array distribution device |
| 9 | Phased array processor |
| 10 | Data-shaping buffer device |
| 11 | Synthetic aperture processor |

| 12 | Platform |
|----|----------|
| 31 | Receiver |
| 101 | Submerged PC |
| 102 | Master PC |
| 103 | Phased array PC |
| 104 | Data shaping PC |
| 105 | Synthetic aperture PC |
| 106 | Storage |

**Claims**

1. A phased-array synthetic-aperture sonar system, comprising:

   a plurality of phased array processors which perform, in parallel, phased array processing for a plurality of incoming data;
   a phased array distribution device which distributes the plurality of incoming data to the plurality of phased array processors for each incoming data, the incoming data being input from a plurality of receivers disposed in a platform;
   a synthetic aperture processor which performs synthetic aperture processing by using a plurality of phased array processing results; and
   a data-shaping buffer device which transfers the phased array processing results output from the plurality of phased array processors to the synthetic aperture processor in an order of receipt of the incoming data.

2. The phased-array synthetic-aperture sonar system according to Claim 1, further comprising a motion data calculator which performs motion-compensated filtering process for the platform on a basis of speed, angle, and altitude information of the platform.

3. The phased-array synthetic-aperture sonar system according to Claim 1, wherein each of the phased array distribution device, the respective phased array processors, the data-shaping buffer device, and the synthetic aperture processor is implemented using PCs.

4. The phased-array synthetic-aperture sonar system according to Claim 1, wherein each PC is defined as a master PC having a function of the phased array distribution device, each of phased array PCs having a function of the phased array processor, a data shaping PC having a function of the data-shaping buffer device, or a synthetic aperture PC having a function of the synthetic aperture processor; and a network including the master PC, each phased array PC, and the data shaping PC is separated from a network including the data shaping PC and the synthetic aperture PC.

5. The phased-array synthetic-aperture sonar system according to Claim 1, wherein the platform is a submarine or an underwater probe.

FIG.1

SONAR TRANSMISSION DEVICE — 2

SONAR RECEIVING ARRAY — 3

MOTION DATA CALCULATOR — 4

INCOMING DATA SAMPLING DEVICE — 5

RANGE COMPRESSION DEVICE — 6

STORAGE DEVICE — 7

PHASED ARRAY DISTRIBUTION DEVICE — 8

PHASED ARRAY PROCESSOR — 9

PHASED ARRAY PROCESSOR — 9

PHASED ARRAY PROCESSOR — 9

DATA-SHAPING BUFFER DEVICE — 10

SYNTHETIC APERTURE PROCESSOR — 11

1

FIG.2

EP 2 549 296 A1

PROXIMAL

DISTAL

TRAVELLING
DIRECTION

12

31

203

203

203

3

31

201

202

Nmax

# FIG.3

```
        ┌─────────────┐
        │    Start    │
        └──────┬──────┘
               ▼
   ┌───────────────────────┐
   │     ECHO RECEIPT      │─── S101
   └───────────┬───────────┘
               ▼
   ┌───────────────────────┐
   │   INCOMING DATA       │─── S102
   │  SAMPLING PROCESS     │
   └───────────┬───────────┘
               ▼
   ┌───────────────────────┐
   │ MOTION FILTER PROCESSING │─── S103
   └───────────┬───────────┘
               ▼
   ┌───────────────────────┐
   │ RANGE COMPRESSION PROCESSING │─── S104
   └───────────┬───────────┘
               ▼
   ┌───────────────────────┐
   │  DATA STORAGE PROCESS │─── S105
   └───────────┬───────────┘
               ▼
   ┌───────────────────────┐
   │    PHASED-ARRAY       │─── S106
   │ DISTRIBUTION PROCESS  │
   └───────────┬───────────┘
               ▼
   ┌───────────────────────┐
   │ PHASED ARRAY PROCESSING │─── S107
   └───────────┬───────────┘
               ▼
   ┌───────────────────────┐
   │  DATA SHAPING PROCESS │─── S108
   └───────────┬───────────┘
               ▼
   ┌───────────────────────┐
   │ SYNTHETIC APERTURE·    │─── S109
   │  DRAWING PROCESS      │
   └───────────┬───────────┘
               ▼
        ┌─────────────┐
        │     End     │
        └─────────────┘
```

# FIG.4

Phased array processing

Start

Target range determination process — S401

Relative position · attitude angle calculation — S402

Receiver position calculation — S403

Sound propagation delay Tdi calculation — S404

Phase difference calculation — S405

S406 — Have processes been carried out on all receivers? — No

Yes — S407

Data storage process

S408 — Have processes been carried out on all ranges? — No

Yes — S409

Have processes been carried out on all lines? — No

Yes

Output to data-shaping buffer device — S410

End

Motion filter processing

Start

Speed · Angle · Acceleration · Altitude acquisition process — S201

Motion-compensated filtering process — S202

End

7

Range compression processing

Start

Range compression processing — S301

S302 — Has process been carried out on all receivers? — No

Yes

Primary data storage process for 1 ping — S303

7

End

# FIG.5

402

402

401

Lstep

12

−1/2Lstep      +1/2Lstep

FIG.6

FIG.7

EP 2 549 296 A1

FIG.8

TRAVELLING
DIRECTION

12

31

701

AZIMUTH
DIRECTION

RANGE DIRECTION

## FIG.9

$N_{max}$ = 4 PINGS

801

DISTAL

OVERLAP OCCURS BETWEEN PROBED REGIONS

801

GAP OCCURS BETWEEN PROBED REGIONS

PROXIMAL

31

12

TRAVELLING DIRECTION

FIG.10

# FIG.11

EP 2 549 296 A1

TRAVELLING
DIRECTION

12

31

1003

1003

1003

1001

1002

Nmax
= 4 PINGS

EP 2 549 296 A1

# FIG.12

### Synthetic aperture processing

```
( Start )
    ↓
┌─────────────────────┐
│   Target range      │ ─ S701
│ determination process│
└─────────────────────┘
    ↓
┌─────────────────────┐
│  Relative position· │
│attitude angle calculation│
└─────────────────────┘ ─ S702
    ↓
┌─────────────────────┐
│  Receiver position  │ ─ S703
│    calculation      │
└─────────────────────┘
    ↓
┌─────────────────────┐
│  Sound propagation  │ ─ S704
│  delay Tdi calculation│
└─────────────────────┘
    ↓
┌─────────────────────┐
│  Coherent addition  │ ─ S705
└─────────────────────┘
    ↓         S706
   ◇ Have processes been ◇  ── No
    carried out on all pings?
    ↓ Yes      S707
┌─────────────────────┐
│ One point seabed imaging │
└─────────────────────┘
    ↓         S708
   ◇ Have processes been ◇  ── No
    carried out on all ranges?
    ↓ Yes      S709
   ◇ Have processes been ◇  ── No
    carried out on all lines?
    ↓ Yes
  ( End )
```

### motion filter processing

```
( Start )
    ↓
┌─────────────────────┐
│  Speed·Angle·       │ ─ S501
│ Acceleration·Altitude│
│ acquisition process │
└─────────────────────┘
    ↓
┌─────────────────────┐
│ Motion-compensated  │ ─ S502
│  filtering process  │
│  storage device     │
└─────────────────────┘
    ↓
  ( End )
```

STORAGE DEVICE

### Range compression processing

```
( Start )
    ↓
┌─────────────────────┐
│ Process for acquiring nmax,│ ─ S601
│  maximum number of  │
│ pings for synthetic aperture│
└─────────────────────┘
    ↓
┌─────────────────────┐
│ Range compression processing │ ─ S602
└─────────────────────┘
    ↓
┌─────────────────────┐
│  Primary data storage │ ─ S603
│  process for 1 ping │
└─────────────────────┘
    ↓         S604
   ◇ Have processes been ◇  ── No
    carried out on all pings?
    ↓ Yes
  ( End )
```

STORAGE DEVICE

23

## INTERNATIONAL SEARCH REPORT

| International application No. |
| --- |
| PCT/JP2011/056648 |

| A. CLASSIFICATION OF SUBJECT MATTER |
| --- |
| *G01S15/89*(2006.01)i, *G01S7/526*(2006.01)i |

According to International Patent Classification (IPC) or to both national classification and IPC

| B. FIELDS SEARCHED |
| --- |

Minimum documentation searched (classification system followed by classification symbols)
G01S7/00-17/95, A61B8/00

Documentation searched other than minimum documentation to the extent that such documents are included in the fields searched

| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2001-116842 A (Hitachi, Ltd.),<br>27 April 2001 (27.04.2001),<br>entire text; all drawings<br>(Family: none) | 1-5 |
| Y | JP 6-88869 A (Texas Instruments Inc.),<br>29 March 1994 (29.03.1994),<br>paragraphs [0016] to [0039]; fig. 1 to 8<br>& EP 480737 A3  & EP 480737 A2 | 1-5 |
| Y | JP 4062311 B1 (Japan Agency for Marine-Earth<br>Science and Technology),<br>19 March 2008 (19.03.2008),<br>entire text; all drawings<br>(Family: none) | 2 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 June, 2011 (10.06.11) | 21 June, 2011 (21.06.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2011/056648

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2009-47516 A  (Pasco Corp.),<br>05 March 2009 (05.03.2009),<br>paragraphs [0001], [0030], [0052]<br>& EP 2180337 A1          & WO 2009/025234 A1<br>& CN 101779143 A | 3-4 |

Form PCT/ISA/210 (continuation of second sheet) (July 2009)

**EP 2 549 296 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001116842 A

- JP 4062311 B

**Non-patent literature cited in the description**

- **T. SAWA ; T. AOKI ; H. YOSHIDA ; T. HYAKUDOME ; S. ISHIBASHI ; S. MATSUBARA ; S. WRIGHT.** Modified synthetic aperture algorithm for sonar systems. *International Journal of Adaptive Control and Signal Processing,* February 2010, vol. 24 (2), 142-148

- **TAKAO SAWA ; TOMOO KAMAKURA ; TARO AOKI ; JYUNICHIRO TAHARA.** Motion compensation of synthetic aperture sonar with acceleration sensors. *Japanese journal of applied physics,* 2007, vol. 46 (7B), 4977-4981